## Europäisches Patentamt
## European Patent Office
## Office européen des brevets

(19)

(11) Veröffentlichungsnummer: **0 144 038**
**A2**

(12) **EUROPÄISCHE PATENTANMELDUNG**

(21) Anmeldenummer: **84114030.4**

(22) Anmeldetag: **20.11.84**

(51) Int. Cl.⁴: **C 11 B 1/10**
**B 01 D 11/02**

(30) Priorität: **01.12.83 DE 3343478**

(43) Veröffentlichungstag der Anmeldung:
**12.06.85 Patentblatt 85/24**

(84) Benannte Vertragsstaaten:
**BE DE FR GB IT**

(71) Anmelder: **Schumacher, Heinz**
**Höperfeld 26**
**D-2050 Hamburg 80(DE)**

(72) Erfinder: **Schumacher, Heinz**
**Höperfeld 26**
**D-2050 Hamburg 80(DE)**

(74) Vertreter: **Dr. E. Wiegand Dipl.-Ing. W. Niemann Dr. M.**
**Kohler Dipl.-Ing. J. Glaeser Dr. H.-R. Kressin**
**Patentanwälte**
**Königstrasse 28**
**D-2000 Hamburg 50(DE)**

(54) **Vorrichtung und Verfahren zur kontinuierlichen Fest-Flüssig-Extraktion.**

(57) Zur Extraktion von Ölen und Fetten aus pflanzlichen Rohstoffen wird mit einer Kombination aus Gegenstromextrakteur (BE) mit Perkolationsprinzip und Schneckenextrakteur (SE) gearbeitet, wobei Letzterer das fast abgereicherte Schrot aus dem Extrakteur (BE) und frisches Lösemittel (L) im Gleichstrom führt, am Ende (16) des Schneckenextrakteurs (SE) die schwach angereicherte Miscella über einen Siebboden (19) vom Schrot getrennt, die Miscella über (10,5) in die letzte Extraktionsstufe des Gegenstromextrakteurs (BE) zurückgeführt und das Schrot (T) in einem nachgeschalteten Entbenziniert vom Lösemittel befreit wird.

EP 0 144 038 A2

./...

0144038

Die Erfindung betrifft eine Vorrichtung und ein Verfahren zur kontinuierlichen Extraktion insbesondere pflanzlicher Rohstoffe zur Gewinnung von Fetten und Ölen, Aromastoffen, Naturprodukten usw. Im speziellen Fall dient die Erfindung der verbesserten Lösungsmittelextraktion von Ölfrüchten und Ölsaaten, wobei die aus dem Saatgut (im folgenden als Sammelbegriff für das feste Rohmaterial verwendet) extrahierten Glyzeridbestandteile (Öle und Fette) in die flüssige Phase übergenen und zusammen mit dem Lösungsmittel die sogenannte Miscella bilden.

Als Extraktionsmittel für Saatgut werden im praktischen Betrieb fast ausschließlich Benzin, Hexan, Heptan, Octan oder deren Gemische mit Siedegrenzen unter 100°C eingesetzt. Diese relativ niedrig siedenden Extraktionsmittel stellen hohe Anforderungen an den konstruktiven Aufwand für die Extraktionsvorrichtung als auch das Extraktionsverfahren, wobei der Aufwand nicht zuletzt die Sicherheit der mit den Lösungsmitteln in Berührung kommenden Betriebsbelegschaft angeht. Ausserdem fordern derart niedrig siedende Lösemittel eine optimale Betriebsführung, damit sich die energetische und stoffliche Extraktionsausbeute in wirtschaftlich vertretbaren Grenzen hält.

Vorrichtungen und Verfahren für kontinuierlich arbeitende Extraktionsprozesse der vorstehend beschriebenen Betriebsweise in einer oder mehreren Stufen sind weitgehend bekannt und werden sowohl in der einschlägigen Fachliteratur ausführlich abgehandelt als auch von der Industrie als komplette Einheiten angebo-

- 2 -

0144038

ten. Genannt seien in diesem Zusammenhang -ohne daß hierdurch eine Einschränkung oder besondere Auswahl getroffen sei- die vertikal angeordneten Extraktionstürme mit oder ohne Rührelemente, horizontal ausgerichtete Rahmenband-Extrakteure, Karussell-Extrakteure mit Perkolationsgegenstromführung, Topf-, Schnecken-, Becherwerks- und Korbextrakteure, unter Druck arbeitende Perkolationsextrakteure usw.

Diese bekannten Anlagen bzw. Vorrichtungen werden z.B. in FR-A- 10 20 991, in GB-A-11 61 945, US-A-2 587 556, DE-A-16 17 004, 10 38 009, 11 49 232, 23 18 018 oder 26 41 143 beschrieben.

Nahezu alle vorstehend beispielhaft genannten Extrakteure und Extraktionsanlagen arbeiten bei der Extraktion von Saatgut im Gegenstrom, d.h., das frische Extraktions- bzw. Lösemittel wird zur Schlußspülung des bereits weitgehend extrahierten Saatguts eingesetzt. Dabei können dieser Endphase der Extraktion weitere Extraktionsstufen vorausgehen, sodaß schließlich eine Miscella anfällt, die je nach Anlage und Vorrichtung etwa 15 - 35 Gew.-% Öl bzw. Fett (Rest Lösemittel) enthält.

Das Mengenverhältnis von Lösungsmittel zum Saatgut liegt im allgemeinen bei etwa 1: 1, insbesondere, wenn z.B. bei der Extraktion von Sojabohnen (Direktextraktion) oder bei der Extraktion von Presskuchen nach dem sogenannten Perkolationsverfahren im Gegenstrom in Band-, Zellenrad-, Korb- oder Schneckenextrakteuren (letztere mit vertikaler Schneckenführung) gearbeitet wird.

Hingewiesen sei in diesem Zusammenhang auf die vorstehend bereits genannten Patentdokumente und weiter auf die DE-A- 23 18 018.

Zwecks Erzielung einer technisch-wirtschaftlichen Prozessoptimierung mit optimalem Extraktionsgrad ist ein größtmöglicher Konzentrationsunterschied bei den beiden die Extraktion bestimmenden Reaktionen, nämlich der Diffusion des Lösungsmittels in das Saatgut und die Lösungsgeschwindigkeit des Öles bzw. Fetts. anzustreben. In der Praxis läßt sich dies erreichen, indem man das Extraktionsgut und das Lösemittel im Gegenstrom zueinander führt, wobei es durch Erneuerung von Miscella einer niedrigeren Konzentration im Laufe des Extraktionsvorgangs zu einem Konzentrationsausgleich kommt.

Von den beiden technisch bisher vielfach realisierten Methoden, die auch in der vorstehend genannten Patentliteratur abgehandelt werden, nämlich der Perkolationsmethode mit Lösemittelführung durch ein ruhendes Bett von Saatgut (z.B. Bandextrakteur nach DE-A-23 18 018) und der Immersionsmethode, bei der das Saatgut z.B. mittels einer Schnecke (DE-C-528 287; "Hildebrandt-Extrakteur") durch die Miscella geführt wird, hat sich das Perkolationsverfahren am meisten durchgesetzt.

Im Anschluß and die Extraktion wird -unabhängig vom jeweiligen Extraktionsverfahren- die optimal mit Öl bzw. Fett angereicher- te Miscella, also dasGemisch aus Öl bzw. Fett und Lösungsmittel, vom extrahierten Rückstand , dem sogenannten Schrot, getrennt und der Aufbereitung (Lösemittelabtrennung, Reinigung, Destil- lation usw.) zugeführt. Das dabei gewonnene Lösemittel kehrt

- 4 -

in den Extraktionsprozess zurück.

Das Schrot enthält noch erhebliche Anteile an Lösemittel (und Wasser) und zwar können im Extraktionsrückstand bis zu 35 Gew.-% -teilweise sogar noch mehr- Lösemittel vorhanden sein, wobei sich diese Werte aus den Verfahrensbedingungen, der Verfahrensmethodik und dem Rohmaterial sowie dem Lösemittel ergeben.

Damit das Schrot als wertvolles Nebenprodukt der Extraktion von Saatgut weiter verwendet werden kann, etwa für Futterzwecke, muß das gesundheitsschädigende Lösemittel optimal abgetrennt werden. Dies erfolgt durch die Entbenzinierung, für die seit langem ebenfalls eine Vielzahl von Verfahren und Vorrichtungen bekannt sind. Anlagen hierzu werden von der einschlägigen Industrie unter den Begriffen Entbenzinierer, Toaster, Trockner, Dämpfer usw. in vielen mehr oder weniger leistungsfähigen Versionen angeboten.

Es versteht sich, daß die Abtrennung und Rückgewinnung des Lösemittels auch aus Gründen der Ökonomie der Extraktionsanlage von größter Bedeutung ist.

Insbesondere bei großvolumigen Extraktionskonstruktionen, die auf dem Prinzip der Perkolation beruhen -aber nicht nur bei diesen- hat sich immer wieder gezeigt, daß bei nicht optimaler Perkolation, deren Quantität ja, wie bereits gesagt, von vielen Faktoren abhängig ist, freies Lösemittel auf dem extrahierten Saatgut regelrecht stehen bleibt, d.h., für den Extraktionsprozess verloren geht.

Zwar ist das auf verschiedenen Wegen vorbehandelte Gut von relativ lockerem Gefüge, es ist porös, es enthält eine Vielzahl von

0144038

Kapillaren, es ist von großer Oberfläche, sodaß es für die Perkolation, d.h. Eindringen des Lösemittels, optimal geeignet erscheint.

Wird jedoch das zerkleinerte bzw. vorbereitete Saatgut mit frischem Lösemittel benetzt, so gelangt letzteres in die Poren und Kapillaren des Materials, sodaß diese regelrecht verschloßen werden, zumal die in den Kapillaren vorhandene Luft -und ggf. auch Feuchtigkeit- ein weiteres Eindringen des Lösemittels verhindert. Zwar wird die eingeschlossene Luft im Verlaufe der Extraktion allmählich freigesetzt, doch hat dies den Nachteil, daß eine kurzzeitig angestrebte Perkolation gehindert ist. Dabei kommt es sehr bald zu einem Konzentrationsausgleich zwischen dem in die Kapillaren und Poren des Saatguts eingedrungenen Lösemittels bzw. Miscella und der Oberfläche der Poren selbst, also der festen Phase. Das Öl bzw. Fett kann dann nur noch durch Diffusion austreten, da eine Strömung des Lösemittels an der Grenzfläche zum Feststoff in den Poren und Kapillaren nicht mehr stattfindet.

Es ist dies mit ein Grund dafür, daß freies bzw. überschüssiges Lösemittel zusammen mit dem Schrot aus dem Extrakteur austritt und in den nachgeschalteten Entbenzinierer bzw. Toaster gelangt. Da aber die bekannten Entbenzinierer bei Temperaturen mehr oder weniger bei oder über dem Siedepunkt des Lösemittels (Hexan, Benzin usw.) arbeiten, kommt es beim Eintragen des freies Lösemittel enthaltenden Schrots in den heißen Toaster (Entbenzinierer) vielfach zur schlagartigen, d.h. spontanen Lösemittelverdampfung, wodurch nicht nur das Bedienungspersonal größter Gefahr ausgesetzt ist, sondern auch durch vom verdampften Lösemittel mitgerissenem feinkörnigem Schrot praktisch alle Leitungen vom Toaster zum Brüdenabzug, zur Brüdenwäsche, ja sogar bis zur destillativen Lösemittelaufbereitung verstopft werden. Neben der ständig notwendigen Reinigung der Leitungen ist die Gefahr einer Überdruckbildung im Toaster nicht zu übersehen.

Es wurde nun gefunden, daß die vorstehend abgehandelten Nachteile und Mängel insbes. von nach dem Perkolationssystem arbeitenden Gegenstrom-Extraktionsanlagen weitgehend behoben und insgesamt eine gesteigerte Extraktionsausbeute, d.h. Lösemittelnutzung, als auch eine gesichertere Entbenzinierung erreicht werden können, wenn dem mit Gegenstromprinzip (Lösemittel und/ bzw. Miscella werden im Gegenstrom zueinander geführt) arbeitenden Extrakteur ein mit Gleichstrom arbeitender Schneckenextrakteur nachgeschaltet wird, der bezüglich des zu extrahierenden Saatguts die letzte Stufe des Gesamtverfahrens, bezüglich des frischen Lösemittels jedoch die erste Stufe des Verfahrens darstellt.

Dies bedeutet, daß frisches Lösemittel zusammen mit dem bereits weitgehend im Gegenstrom ausextrahierten Saatgut in den Schneckenextrakteur eingeführt wird, anschließend vom völlig ausextrahierten Saatgut getrennt und schließlich als schwach angereicherte Miscella in den Gegenstrom-Perkolationsextrakteur eintritt, um dort im Gegenstrom zum Saatgut die Extraktion auf optimale Miscellakonzentration zu treiben.

Besonders vorteilhaft arbeitet das neue Verfahren, wenn als Schneckenextrakteur für die Gleichstromführung von frischem Lö-

0144038

semittel und abgereichertem Saatgut ein solcher verwendet wird, wie er in der EP-A-0 076 871 beschrieben ist. Dieser ist insbes. dadurch definiert, daß die Gänge der Schnecke am Ort des Eingangs des abgereicherten Extraktionsguts einen kleinsten Gangabstand aufweisen, der sich in Richtung des Austrags des Extraktionsguts (Saatgut) stetig oder gruppenförmig erweitert und am Saatgutaustrag (Schrotaustrag) einen größten Wert aufweist. Dabei ist vor dem Schrotaustrag in dessen unmittelbarer Nähe ein Teil des Wannenbodens der Schnecke siebartig oder perforiert ausgebildet und mit einer Ableitung für die schwach angereicherte Miscella versehen. Besonders vorteilhaft ist es weiterhin, wenn die Extraktionsschnecke als ineinandergreifende Doppelschnecke ausgebildet ist.

Es hat sich überraschenderweise gezeigt, daß durch die Verfahrensweise der Erfindung nicht nur eine erhebliche Lösemitteleisparung nachgewiesen wird, wodurch beispielsweise das Verhältnis Lösemittel zum Rohmaterial von üblicherweise 1 : 1 noch gesenkt werden kann, sondern es wird auch ein Schrot erhalten, das erheblich weniger freies Lösemittel enthält, da die letzte, sogenannte Nachextraktion des bereits abgereicherten Saatguts mit frischem Lösemittel erfolgt, wobei die Abtrennung der relativ niedrig konzentrierten und damit niedrigviskosen Miscella am Ausgang des Schneckenextrakteurs, d.h. im Austragsorgan der Gesamtanlage erfolgt.

Die besondere Konstruktion des Schneckenextrakteurs gemäß EP-A-0 076 871, der im Sinne der Erfindung somit als Austragsorgan des abgereicherten Schrots gilt, führt somit zu einer letzten, sogenannten Nachextraktion, indem die relativ konzentrierte Miscella in den Poren und Kapillaren des Saatguts durch ölfreies, frisches Lösemittel ersetzt bzw. verdrängt wird, sodaß eine abschließende, durchgreifende Perkolation und damit Extraktion erfolgt.

Als Ergebnis hiervon ist das Schrot wesentlich lösemittelärmer, d.h., es werden bei Verwendung von Hexan z.B. zwischen 22 und 28 % Lösemittel im Schrot festgestellt gegenüber 30 bis 35 % ohne die erfindungsgemäßen Maßnahmen.

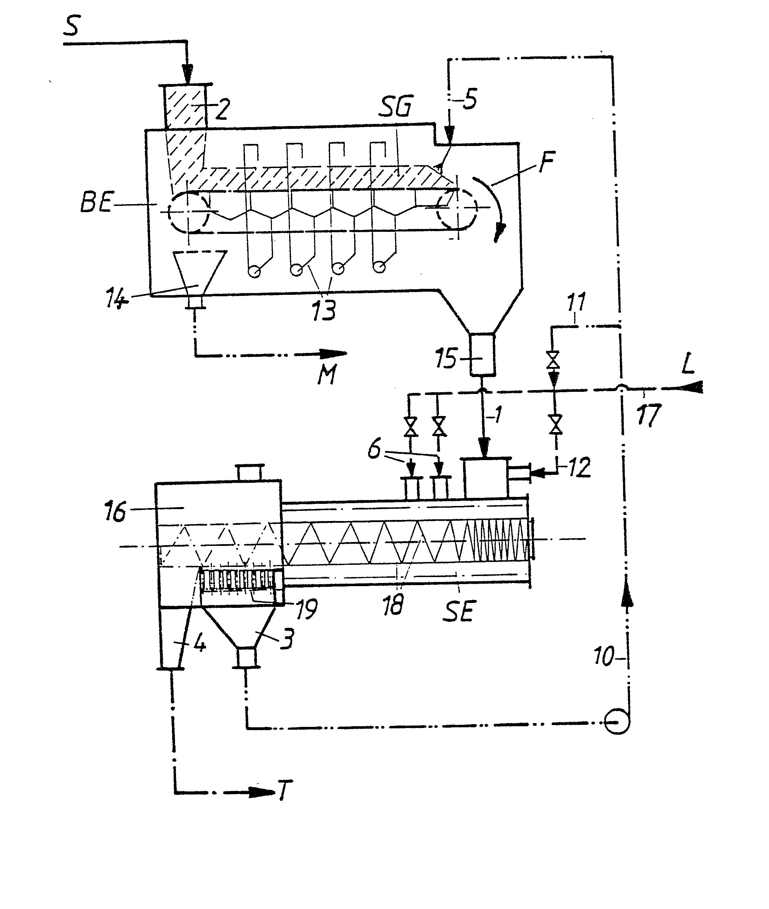

Das Verfahren gemäß der Erfindung und eine zur Durchführung des Verfahrens geeignete Anlage wird nachfolgend anhand der Figur näher beschrieben, wobei ausdrücklich darauf hingewiesen sei, daß diese Figur nur der Veranschaulichung dient und nicht den Umfang der Erfindung begrenzt oder einschränkt.

Mit (BE) ist ein nach dem Perkolationssystem im Gegenstrom arbeitender Extrakteur, z.B. ein Bandextrakteur bezeichnet, dem das zu extrahierende, vorbereitete Rohmaterial (Saatgut) (S) über Stzutzen (2) kontinuierlich zugeführt wird.

Gegenüber der Saatgutaufgabe, d.h. am andern Ende des Extrakteurs (BE) wird über Leitung (5) eineschwach mit Öl oder Fett angereicherte Miscella auf das weitgehend extrahierte Saatgut (SG) aufgesprüht bzw. aufgegeben und entgegen der Richtung der Saatgutförderung (F) durch ein geeignetes System von Pumpen und Leitungen (13) bei laufender Perkolation zum Miscellaablauf (14) gefördert. Es fällt also im Bereich unterhalb der Saatgutaufgabe (2) eine weitgehend angereicherte Miscella an, die über Leitung (M) der Miscellaaufbereitung (Lösemittelabtrennung, Ölreini-

- 9 -

gung usw.) zugeführt wird.　　　　　　　　**0144038**

Im übrigen ist die Arbeitsweise derartiger Bandextrakteure allgemein bekannt, sodaß auf weitere Einzelheiten verzichtet werden kann. Anstelle eines Bandextrakteurs könnte hier auch ein Karrussellextrakteur oder irgend ein anderer nach dem Perkolationsprinzip im Gegenstrom arbeitender Extrakteur eingesetzt werden.

Über Stutzen (15) verläßt das weitgehend ausextrahierte Schrot den Extrakteur (BE) und gelangt über Leitung (1) kontinuierlich in den nachgeschalteten Schneckenextrakteur (SE). Dieser Arbeitet im Gleichstrom, indem das Schrot zusammen mit frischem Lösemittel (L) durch die Schnecke (SE) bis zur Ausgangswanne (16) geführt wird. Der Schnekenextrakteur stellt im übrigen die letzte Stufe des Gesamtverfahrens dar.

Zugleich mit dem weitgehend abextrahierten Schrot wird der Schnekenextrakteur (SE) -wie bereits gesagt- über Leitung (17) mit frischem Lösemittel im Gleichstrom beschickt.

Die Gänge (18)des Schneckenextrakteurs weisen, wie die Figur zeigt, am Ort des Eingangs des Schrots einen kleinsten Gangabstand auf, der sich in Richtung des Ausgangs (Ausgangswanne 16) entweder stetig oder -wie dargestellt- gruppenförmig erweitert und im Bereich (16) einen größten Wert annimmt.

Im ersten Teil des Bereichs (16) der Schnecke (SE) ist der Boden der Wanne siebartig oder perforiert ausgebildet (19) und mit einem Ableitstutzen für Lösemittel bzw. schwach angereicherte Miscella (3) versehen. Hierdurch bedingt, veläßt über den Trichter (4) ein Schrot (T), das praktisch frei ist von überschüssigem Lösemittel, bzw. kein überstehendes Lösemittel mehr enthält. Das Schrot (T) gelangt vom Trichter (4) zum nachgeschalteten Entbenzinierer oder Toaster, z.B. in einen solchen, wie er in EP-A-0 077 436 beschrieben wird.

Die über (3) ablaufende, schwach angereicherte Miscella gelangt über Leitung (10) -ggf. nach Zwischenlagerung- und Leitung (5) zum Extrakteur (BE) wie eingangs beschrieben. Ggf. kann ein Teil der schwach angereicherten Miscella aus Leitung (10) über Leitung (11) zusammen mit frischem Lösemittel (L) über Leitung (12) und ggf. Leitungen (6) dem Schneckenextrakteur (SE) aufgegeben werden.

Patentansprüche

1. Verfahren zur kontinuierlichen Extraktion insbesondere öl- und fetthaltiger pflanzlicher Rohstoffe mit organischen Lösemitteln, wobei das vorbereitete Rohmaterial und das Lösemittel zueinander im Gegenstrom und insbesondere perkolativ behandelt werden, die da dabei gebildete, aus Lösemittel und gelöstem Öl bzw. Fett gebildete Miscella vom extrahierten Rückstand, dem Schrot, zwecks Aufbereitung abgetrennt und das Schrot in einer nachgeschalteten Entbenzinierungsstufe von anhaftendem Wasser, Lösemittel und/bzw. Miscella befreit wird, während das aus der Miscellaaufbereitung kommende Lösemittel wieder in den Extraktionsprozess zurückgeführt wird, dadurch gekennzeichnet, daß der perkolativ arbeitenden Gegenstromextraktion eine Gleichstromextraktion nachgeschaltet ist, in welcher durch frisches Lösemittel das aus der Gegenstromextraktion kommende, bereits weitgehend abextrahierte Extraktionsgut in einem Schneckenextrakteur abschließend behandelt wird, wobei am Ende des Schneckenextrakteurs eine Perforierung und/oder Sieböffnung vorgesehen ist, über die das Lösemittel bzw. die schwach angereicherte Miscella vom Schrot getrennt und anschließend in die abschließende Stufe des Gegenstromextrakteurs zurückgeführt wird, von wo aus die weitere Gegenstromextraktion erfolgt, am Materialeingang zum Gegenstromextrakteur schließlich die hoch konzentrierte Miscella abgezogen wird, während das Schrot vom Schneckenextrakteur direkt in die Entbenzinierung gelangt.

2. Vorrichtung zur Durchführung des Verfahrens nach Anspruch 1, gekennzeichnet durch einen nach dem Perkolationssystem arbeitenden Gegenstromextrakteur (BE) und einen Schneckenextrakteur (SE), die beide bezüglich des Schrots über (15,1) in direkter Verbindung stehen, über Leitungen (10,5) bezüglich Lösemittel und/oder Miscella verbunden sind, der Schneckenextrakteur (SE) an seinem dem Schroteingang gegenüberliegenden Ende (Wanne 16) einen perforierten oder siebbodenartigen Unterteil (19) aufweist, über den das Schrot zum Abnahmetrichter (4) weitergeführt wird, während das schwach angereicherte Lösemittel über Stutzen (3) und Leitungen (10), (5) zurück zum Gegenstromextrakteur (BE) gelangt.

3. Vorrichtung nach Anspruch 2, gekennzeichnet durch einen Schneckenextrakteur (SE), dessen Schneckengänge (18) am Ort des Schroteingangs einen kleinsten Gangabstand aufweisen, der sich in Richtung zur Wanne (16) entweder stetig oder gruppenförmig erweitert und im Bereich der Wanne (16) bzw. des perforierten Bodens (19) einen größten Wert besitzt.